# EUROPÄISCHE PATENTANMELDUNG

(11) **EP 3 757 700 A1**
(43) Veröffentlichungstag der Anmeldung: **30.12.2020**
(21) Anmeldenummer: 19182858.1
(22) Anmeldetag: 27.06.2019
(51) Int. Cl.: G05B 19/409

(54) **SYSTEM UND VERFAHREN ZUR STEUERUNG EINER WERKZEUGMASCHINE UND EINER AUTO-VORSCHUBVORRICHTUNG MIT EINEM HUMAN MACHINE INTERFACE, DAS AN DER WERKZEUGMASCHINE ANGEORDNET IST**

(71) Anmelder: Hilti Aktiengesellschaft, 9494 Schaan (LI)
(72) Erfinder: Schaefer, Martin, 6858 Schwarzach (AT); Balter, Marco, 6800 Feldkirch (AT); Metzler, Christian, 6822 Satteins (AT)
(74) Vertreter: Hilti Aktiengesellschaft Corporate Intellectual Property

(57) **Zusammenfassung**

Die vorliegende Erfindung betrifft ein System, das eine Werkzeugmaschine und eine automatische Vorschubvorrichtung umfasst, wobei die Werkzeugmaschine ein *Human Machine Interface* (HMI) zur Steuerung der Werkzeugmaschine und der automatischen Vorschubeinrichtung aufweist. Das System ist dadurch gekennzeichnet, dass eine Menüführung des HMI in Abhängigkeit von Betriebszuständen der Werkzeugmaschine und/oder der automatischen Vorschubvorrichtung automatisch steuerbar ist. In einem weiteren Aspekt betrifft die Erfindung die Verwendung eines HMI zur Steuerung einer Werkzeugmaschine und/oder einer Auto-Vorschubvorrichtung, wobei die Werkzeugmaschine und die Auto-Vorschubvorrichtung, zusammen ein Arbeitssystem bilden.

## Beschreibung

Die vorliegende Erfindung betrifft ein System, das eine Werkzeugmaschine und eine automatische Vorschubvorrichtung umfasst, wobei die Werkzeugmaschine ein *Human Machine Interface* (HMI) zur Steuerung der Werkzeugmaschine und der automatischen Vorschubeinrichtung aufweist. Das System ist dadurch gekennzeichnet, dass eine Menüführung des HMI in Abhängigkeit von Betriebszuständen der Werkzeugmaschine und/oder der automatischen Vorschubvorrichtung automatisch steuerbar ist. In einem weiteren Aspekt betrifft die Erfindung die Verwendung eines HMI zur Steuerung einer Werkzeugmaschine und/oder einer Auto-Vorschubvorrichtung, wobei die Werkzeugmaschine und die Auto-Vorschubvorrichtung, zusammen ein Arbeitssystem bilden.

Im Bereich der Werkzeugmaschinen, insbesondere bei Kernbohrgeräten, die beispielsweise mit diamantbesetzten Bohrkronen ausgestattet sein können, ist es bekannt, die Werkzeugmaschinen in Verbindung mit einer automatischen Vorschubvorrichtung (*auto feed*) zu betreiben. Solche auch als Auto-Vorschubvorrichtungen bekannte Einrichtungen sind vorzugsweise dazu eingerichtet, die Werkzugmaschine selbsttätig in das zu bearbeitende Material hineinzutreiben, ohne dass dafür - wie früher - handbetriebene Vorrichtungen, wie beispielsweise Drehräder, eingesetzt werden müssen.

Um ein gewünschtes Arbeitsergebnis zu erzielen, müssen die automatische Vorschubeinrichtung und die Werkzeugmaschine aufeinander abgestimmt arbeiten bzw. gesteuert werden. Dazu müssen Eingaben und/oder Einstellungen an den Geräten vorgenommen werden, wobei solchen Eingaben bzw. Einstellungen zumeist unter Verwendung von Eingabemitteln in die Geräte eingegeben werden. Häufig werden jedoch die Eingabemittel insbesondere an den automatischen Vorschubvorrichtungen aus Kosten oder Gründen der einfachen Bedienbarkeit des Systems schlank gehalten. Es sind im Stand der Technik insbesondere solche Systeme aus Werkzeugmaschine und Auto-Vorschubvorrichtung bekannt, bei denen die Auto-Vorschubeinrichtung keine Anzeigenelemente umfasst. Manchmal weisen solche Auto-Vorschubvorrichtungen lediglich eine Not-Aus-Taste als Minimallösung für eine Mensch-Maschine-Kommunikation auf. Um eine solche minimalistische, automatische Vorschubvorrichtung dennoch bedarfsgerecht steuern zu können, wurde im Stand der Technik vorgeschlagen, die Auto-Vorschubvorrichtung über das *Human Machine Interface* (HMI) der Werkzeugmaschine mitzusteuern. Mit anderen Worten ist es im Stand der Technik bekannt, dass das HMI der Werkzeugmaschine zur Steuerung von sowohl der Werkzeugmaschine, als auch der Auto-Vorschubvorrichtung genutzt wird.

Ein HMI im Sinne der Erfindung kann beispielsweise ein Display, Anzeigenelemente, Bedienelemente oder andere Eingabe- und/oder Ausgabemittel umfassen, mit denen Vorrichtungen von einem Menschen gesteuert werden können bzw. mit denen Informationen, die das Gerät betreffen, dem Bediener angezeigt werden können. Insbesondere beschreibt der Begriff HMI im Sinne der Erfindung diejenigen Mittel an einer Vorrichtung, die die Kommunikation zwischen Mensch und Maschine ermöglichen oder unterstützen.

Bei konventionellen Systemen aus Werkzeugmaschinen und Auto-Vorschubvorrichtungen ist es teilweise üblich, dass die Auto-Vorschubvorrichtungen auch über das HMI der Werkzeugmaschine gesteuert werden. Dies führt zu verschiedenen Schwierigkeiten oder technischen Herausforderungen. Obwohl sowohl die Werkzeugmaschine, als auch die Auto-Vorschubvorrichtung im selben System arbeiten, ist es wünschenswert, dass die Betriebszustände von beiden Systembestandteilen möglichst gleichzeitig angezeigt werden können. Dies ist offensichtlich bei nur einem vorhandenen Display schwer möglich oder die Anzeige muss sehr klein gehalten werden und ist daher für einen Bediener schwer lesbar. Darüber hinaus müssen sowohl die Werkzeugmaschine, als auch die Auto-Vorschubeinrichtung mit denselben Bedienelementen - nämlich den Bedienelemente des HMI der Werkzeugmaschine - bedient werden. Hier kann es leicht zu fehlerhaften Eingaben kommen, die zu fehlerhaften und ggf. nicht reversiblen unerwünschten Arbeitsergebnissen führen können. Es ergibt sich, dass sowohl die Anzeige, als auch die Eingabe von Daten mit Schwierigkeiten verbunden sein kann, wenn als Steuerungsmittel für sowohl die Werkzeugmaschine, als auch die Auto-Vorschubvorrichtung nur ein HMI - üblicherweise das HMI der Werkzeugmaschine - verwendet wird.

Zur Behebung dieses Zustands ist im Stand der Technik vorgeschlagen worden, dass der Bediener des Systems aus Werkzeugmaschine und Auto-Vorschubvorrichtung einen Betriebsmodus und damit das aktuell zu bedienende Gerät auswählt. Der Begriff "Betriebsmodus" bedeutet im Sinne der Erfindung bevorzugt, dass zu einem Zeitpunkt ti entweder die Werkzeugmaschine oder die Auto-Vorschubvorrichtung mit dem HMI der Werkzeugmaschine gesteuert wird. Es gibt demnach einen Werkzeugmaschinen-Betriebsmodus und einen Auto-Vorschubvorrichtungs-Betriebsmodus. Der Bediener kann somit am HMI auswählen, ob er gerade die Werkzeugmaschine oder die Auto-Vorschubvorrichtung bedienen und/oder steuern möchte. Er kann dazu auch die entsprechenden und für das jeweilige Gerät relevanten Zubehör-Elemente, wie zum Beispiel eine digitale Wasserwaage oder eine manuelle Anbohrstufenselektion, auswählen. Dies ist aber in der Regel mit einem manuellen Eingriff in das System und zumeist mit einem unerwünschten Effizienzverlust verbunden. Darüber hinaus setzt ein solcher Auswahlprozess ein erhebliches Fachwissen des Bedieners voraus, das unter Umständen nicht immer gewährleistet werden kann.

Die Aufgabe, die der vorliegenden Erfindung zugrunde liegt, besteht darin, die vorstehend beschriebenen Nachteile des Standes der Technik zu überwinden und ein System aus Werkzeugmaschine und Auto-Vorschubvorrichtung bereitzustellen, mit dem sowohl die Anzeige, als auch die Eingabe von Daten in das bzw. von dem System erleichtert werden kann. Insbesondere soll die bekannte Lösung, eine Auto-Vorschubvorrichtung über ein HMI der Werkzeugmaschine, mit dem die Auto-Vorschubvorrichtung zusammenarbeitet, mitzusteuern, in dem Sinne verbessert werden, dass für den Bediener eine möglichst einfach, selbsterklärende und ergonomische Funktionsweise der unterschiedlichen Betriebsmodi des Systems ermöglicht wird. Dadurch soll insbesondere eine besonders intuitive und leicht zu erlernende Steuerung innerhalb der unterschiedlichen Betriebsmodi des Systems bereitgestellt werden, wobei insbesondere eine Funktion des Systems im "normalen" Betrieb der Werkzeugmaschine ermöglicht werden soll, sowie im Zusammenspiel mit einer Auto-Vorschubvorrichtung.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System vorgesehen, das eine Werkzeugmaschine und eine automatische Vorschubvorrichtung umfasst, wobei die Werkzeugmaschine ein *Human Machine Interface* (HMI) zur Steuerung der Werkzeugmaschine und der automatischen Vorschubeinrichtung aufweist. Das System ist dadurch gekennzeichnet, dass eine Menüführung des HMI in Abhängigkeit von Betriebszuständen der Werkzeugmaschine und/oder der automatischen Vorschubvorrichtung automatisch steuerbar ist. Dies bedeutet im Sinne der Erfindung bevorzugt, dass die Menüführung des HMI verschiedene Menüseiten umfasst, wobei die einzelnen Menüseiten oder Bestandteile einzelner Menüseiten in Abhängigkeit von Betriebszuständen der Werkzeugmaschine und/oder der automatischen Vorschubvorrichtung anzeigbar sind.

Bei der Werkzeugmaschine kann es sich insbesondere um eine Kernbohrgerät handeln. Die Auto-Vorschubvorrichtung ist vorzugsweise dazu eingerichtet, eine Cut Assist-Funktion bereitzustellen. Das bedeutet im Sinne der Erfindung, dass ein Werkzeug der Werkzeugmaschine mit Hilfe der Auto-Vorschubvorrichtung in eine zu bearbeitende Wand oder in einen zu bearbeitenden Untergrund hineingetrieben wird. Bei dem Werkzeug der Werkzeugmaschine kann es sich beispielsweise um eine Bohrkrone handeln. Häufig sind solche Bohrkronen mit Diamanten oder Diamantsplittern besetzt, um die Schneidleistung zu verbessern. Es ist in diesen Fällen bevorzugt, dass die Werkzeugmaschine ein Diamant-Kernbohrgerät ist. Die Erfindung besteht in einer bevorzugten Ausgestaltung darin, dass die Menüführung des HMI des Kernbohrgeräts anhängig von den Betriebszuständen des Kernbohrgeräts und/oder der Auto-Vorschubvorrichtung gesteuert wird. Dadurch ist eine manuelle Selektion der Unterpunkte der Menüführung durch den Bediener vorteilhafterweise nicht mehr erforderlich.

Die Formulierung "Betriebszustand der Werkzeugmaschine" beschreibt im Sinne der Erfindung bevorzugt einen Zustand der Werkzeugmaschine während des Betriebs des vorgeschlagenen Systems. Dieser Zustand kann durch verschiedene Einstellungen und Gegebenheiten der Werkzeugmaschine gekennzeichnet sein. Beispielsweise kann der Zustand einer Werkzeugmaschine dadurch gekennzeichnet sein, dass die Werkzeugmaschine eingeschaltet ist oder dadurch, dass die Werkzeugmaschine mit einer Auto-Vorschubvorrichtung verbunden ist. Analog kann ein Zustand der automatischen Vorschubvorrichtung dadurch gekennzeichnet sein, dass ihr Not-Aus-Schalter freigeben ist oder dass eine Verbindung zur Werkzeugmaschine nicht besteht. Vorzugsweise wird ein Zustand durch eine Menge an verschiedenen Unter-Zuständen charakterisiert, wobei die Menge an Unter-Zuständen bevorzugt den Betriebszustand einer Systemkomponente oder des vorgeschlagenen Systems bildet. Es ist im Sinne der Erfindung insbesondere bevorzugt, dass die Betriebszustände von Einstellungen und/oder Unter-Zuständen der Werkzeugmaschine und/oder der automatischen Vorschubvorrichtung gebildet werden.

Die Formulierung, dass eine Menüführung "automatisch steuerbar" ist, bedeutet im Sinne der Erfindung bevorzugt, dass unterschiedliche Menüseiten oder Menüübersichten ohne manuelles Zutun eines menschlichen Bedieners angezeigt werden. Die automatische Steuerbarkeit der Menüführung des HMI der Werkzeugmaschine stellt einen wesentlichen Vorteil der Erfindung dar. Das System ist vorzugsweise in der Lage, den jeweiligen Betriebszustand der Systemkomponenten und/oder des vorgeschlagenen Systems zu erkennen und im Lichte des ermittelten Betriebszustands diejenigen Menüpunkte oder Menü-Unterseiten anzuzeigen, die zum aktuellen Betriebszeitpunkt relevant für den Bediener sind, um einen optimalen Betrieb des Systems bzw. seiner Komponenten zu gewährleisten. Es ist im Sinne der Erfindung bevorzugt, dass das System dazu eingerichtet ist, die Betriebszustände der Werkzeugmaschine und/oder der automatischen Vorschubvorrichtung zu erkennen und auszuwerten. Zur Ermittlung der aktuellen Betriebszustände kann das System bzw. seine Komponenten eine geeignete Sensorik und/oder einen Prozessor für die Auswertung und/oder Speicherung der erhobenen und/oder verarbeiteten Daten aufweisen.

Ferner kann das System über Kommunikationsmittel zwischen der Werkzeugmaschine und der Auto-Vorschubvorrichtung verfügen. Das System kann eine Kommunikationsverbindung umfassen, mit der eine Kommunikationsmöglichkeit zwischen der Werkzeugmaschine und der automatischen Vorschubvorrichtung bereitgestellt werden kann. Es ist im Sinne der Erfindung bevorzugt, dass das System eine Kommunikationsverbindung zur Kommunikation zwischen der Werkzeugmaschine und der automatischen Vorschubvorrichtung umfasst. Vorzugsweise ist die Kommunikationsverbindung des vorgeschlagenen Systems drahtlos, beispielsweise als *bluetooth-*Kommunikationsverbindung, ausgestaltet, wobei auch andere Kommunikationsarten im Kontext der vorliegenden Erfindung denkbar sind, zum Beispiel NFC, Funk oder andere insbesondere für kurze Distanzen geeignete Kommunikationsformen. Die Kommunikation kann beispielsweise auch drahtgebunden, also zum Beispiel unter Verwendung eines Kabels erfolgen. Es ist im Sinne der Erfindung bevorzugt, dass die Kommunikationsverbindung dazu eingerichtet ist, die für die Steuerung bzw. die Kommunikation zwischen Werkzeugmaschine und Auto-Vorschubvorrichtung erforderliche Datenraten und/oder Übertragungsgeschwindigkeit bereitzustellen.

Die Formulierung "in Abhängigkeit von den Betriebszuständen der Werkzeugmaschine und/oder der Auto-Vorschubvorrichtung" bedeutet im Sinne der Erfindung bevorzugt, dass das System dazu eingerichtet ist, zu erkennen, in welchem Betriebszustand die Werkzeugmaschine bzw. die Auto-Vorschubeinrichtung gerade arbeitet. Dem Bediener des Systems werden dann über das HMI der Werkzeugmaschine nur diejenigen Unterpunkte bzw. Unterseiten der Menüführung angezeigt, die in dem jeweiligen Betriebszustand des Systems gerade relevant sind. Eine Unterseite der Menüführung kann beispielsweise dadurch relevant sein, dass eine auf dieser Unterseite angezeigte Information für den Bediener oder für die Fortführung der Arbeit mit dem System notwendig ist. Eine Relevanz kann sich beispielsweise auch daraus ergeben, dass auf dem Display des HMI eine Funktion angezeigt wird, die in Verbindung mit ebenfalls zum HMI der Werkzeugmaschine gehörenden Bedien- oder Auswahlelementen ausgewählt werden kann, wobei diese Auswahl für die Fortführung der Arbeit mit dem System erforderlich ist.
Es ist im Sinne der Erfindung bevorzugt, dass die Auto-Vorschubvorrichtung in Zusammenhang mit der Werkzeugmaschine dazu eingerichtet ist, einen vollautomatischen Bohrprozess auszuführen, steuern und/oder zu bewirken. Insbesondere umfasst der vollautomatische Bohrprozess die Vorgänge des Anbohrens, Bohrens, Erkennens der Fertigstellung des Bohrloches und/oder die Rückkehr zur Ausgangsposition, ohne darauf beschränkt zu sein. Es ist im Sinne der Erfindung bevorzugt, dass eine Steuerung der Auto-Vorschubvorrichtung des vorgeschlagenen Systems in der Auto-Vorschubvorrichtung selbst erfolgt, wobei die Werkzeugmaschine vorzugsweise die dafür erforderlichen Informationen liefert. Es ist im Sinne der Erfinder ferner bevorzugt, dass mit der Werkzeugmaschine des Systems eine Anzeige- und Einstellmöglichkeit bereitgestellt wird, die für die Steuerung der Auto-Vorschubvorrichtung verwendet werden kann. Vorzugsweise werden diese Anzeige- und Einstellmöglichkeiten durch die Vorsehung des HMI an der Werkzeugmaschine bereitgestellt. Das HMI der Werkzeugmaschine des hier vorgeschlagenen Systems ist insbesondere dazu eingerichtet, komplexe Informationen besonders übersichtlich darzustellen. Dazu kann beispielsweise ein Matrix-Dot-Display verwendet werden. Mit einem solchen Display, das insbesondere zur Anzeige komplexer Informationen eingerichtet ist, können vorteilhafterweise nicht nur alphanummerische Anzeigezeilen, wie zum Beispiel Fehlercodes, angezeigt werden, sondern auch zweidimensionale Objekte, wie Diagramme, Koordinatensystem oder dergleichen. Durch die Möglichkeit, komplexe Informationen anzuzeigen, unterscheidet sich die vorliegende Erfindung insbesondere von sogenannten Segment-Displays, die zumeist auf die Anzeige von einzeiligen Buchstaben- und Zahlenkombinationen beschränkt sind, vergleichbar einem nicht-programmierfähigen Taschenrechner.

Die Erfindung soll im Folgenden durch Anwendungsbeispiele verdeutlicht werden. Wenn beispielsweise die Auto-Vorschubvorrichtung und die Werkzeugmaschine miteinander verbunden sind, ein Austausch von Daten zwischen den beiden Systembestandteilen möglich ist, eine Not-Aus-Taste der Auto-Vorschubvorrichtung freigegeben ist und ein An-Aus-Schalter der Werkzeugmaschine ausgeschaltet ist, können Anzeige- und Bedienelemente des HMI der Werkzeugmaschine zu einer Positionierung der Auto-Vorschubvorrichtung und/oder zur Ausrichtung des Bohrsystems der Werkzeugmaschine aktiviert werden. Dieser Betriebszustand des Systems wird im Sinne der Erfindung beispielsweise als *Cut Assist Positioning-*Modus bezeichnet. Die Positionierung der Auto-Vorschubvorrichtung betrifft dabei insbesondere eine Auf- und AbBewegung der Auto-Vorschubvorrichtung. Die Ausrichtung des Bohrsystems kann vorzugsweise unter Zuhilfenahme einer digitalen Wasserwage erfolgen, die Bestandteil des Systems, insbesondere der Werkzeugmaschine, sein kann. Wird nun in diesem *Cut Assist Positioning-Modus* der Ein-Aus-Schalter der Werkzeugmaschine betätigt, wechseln die Anzeige- und Bedienelemente des HMI der Werkzeugmaschine auf den sogenannten *Cut Assist* Setting-Modus. In dem *Cut Assist* Setting-Modus können die Anzeige- und Bedienelemente zur Einstellung, sowie zum Start des automatischen Bohrbetriebs aktiviert werden. Die Einstellung des automatischen Bohrbetriebs kann beispielsweise das Ein- und Ausschalten der Durchbruchserkennung oder eine Leistungsreduktions-Funktion der Auto-Vorschubvorrichtung beinhalten. Es ist im Sinne der Erfindung bevorzugt, dass die Anzeige- und Bedienelemente in den "normalen" Kernbohrbetrieb schalten bzw. wechseln, wenn der automatische Bohrbetrieb gestartet wird.

Es ist im Sinne der Erfindung bevorzugt, dass Komponenten des HMI der Werkzeugmaschine ausgewählt sind aus einer Gruppe, die folgende Komponenten umfassen kann: Display, Touch-Bildschirm, Bedienelemente, Tasten, Schalter, Ausgabemittel und/oder Anzeigenmittel, ohne darauf beschränkt zu sein. Insbesondere kann das System bzw. das HMI auch ein Dashboard bzw. eine Dashboard-Funktion umfassen. Beispielsweise kann das HMI dazu eingerichtet sein, unterschiedliche Funktionen auf dem Display anzuzeigen. Bei diesen Funktionen kann es sich beispielsweise um eine Ganganzeige, Fehler- und/oder Warnmeldungen, Angaben zum Status der Kommunikationsverbindung (*bluetooth* an oder aus) handeln, ohne darauf beschränkt zu sein. Insbesondere können mit dem HMI der Werkzeugmaschine der vorliegenden Erfindung mehrere verschiedene Informationen gleichzeitig angezeigt werden, da das Display vorteilhafterweise nicht auf eine einzeilige Anzeige beschränkt ist.

In einem zweiten Aspekt betrifft die Erfindung ein Verfahren zur Steuerung einer Werkzeugmaschine und einer Auto-Vorschubvorrichtung mit einem *Human Machine Interface* (HMI), das an der Werkzeugmaschine angeordnet ist, wobei das Verfahren durch die folgenden Schritte gekennzeichnet ist:
a) Bereitstellung einer Werkzeugmaschine mit einer HMI,
b) Bereitstellung einer automatischen Vorschubvorrichtung,
wobei eine Menüführung des HMI der Werkzeugmaschine so eingerichtet ist, dass zu einem Zeitpunkt tBetrieb des Betriebs der Werkzeugmaschine oder der automatischen Vorschubvorrichtung über das HMI nur diejenigen Menüseiten der Menüführung anzeigt werden, die für den Betrieb der Werkzeugmaschine und/oder der automatischen Vorschubeinrichtung und/oder dessen Fortsetzung erforderlich sind. Es ist im Sinne der Erfindung insbesondere bevorzugt, dass die automatische Vorschubvorrichtung kein eigenes HMI umfasst, sondern das die Auto-Vorschubvorrichtung durch das HMI der Werkzeugmaschine mitgesteuert wird. Es ist in einer Ausgestaltung der Erfindung bevorzugt, dass eine Auswahl der Menüseiten der Menüführung in Abhängigkeit von Betriebszuständen der Werkzeugmaschine und/oder der automatischen Vorschubeinrichtung erfolgt. Insbesondere sind die Werkzeugmaschine und/oder die automatische Vorschubvorrichtung dazu eingerichtet, die Betriebszustände der Werkzeugmaschine und/oder der automatischen Vorschubvorrichtung zu erkennen und auszuwerten.

In einem weiteren Aspekt betrifft die Erfindung die Verwendung eines *Human Machine Interface* (HMI) zur Steuerung einer Werkzeugmaschine und einer Auto-Vorschubvorrichtung. Die Verwendung ist dadurch gekennzeichnet, dass das HMI an der Werkzeugmaschine angeordnet ist. Die Definitionen, technischen Wirkungen und überraschenden Vorteile, die für das vorgeschlagene System beschrieben wurden, gelten für das Verfahren und der Verwendung des HMI der Werkzeugmaschine analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

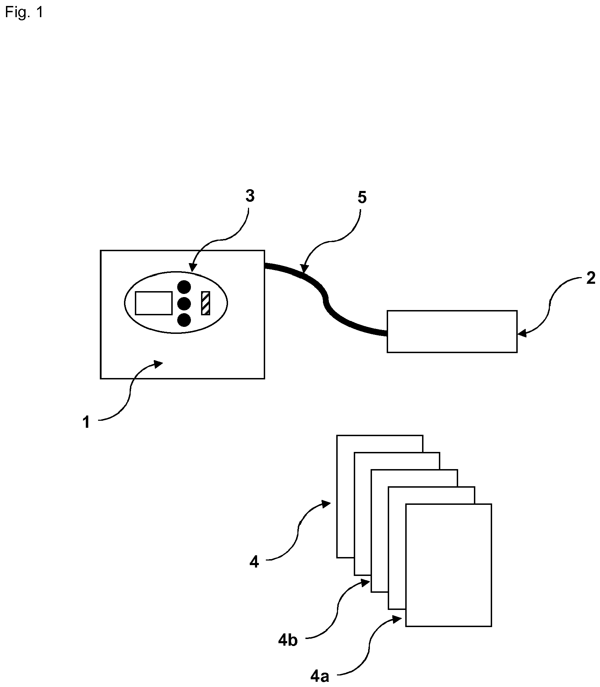

- Fig. 1: Ansicht einer bevorzugten Ausgestaltung der Erfindung

### Ausführungsbeispiele:

Figur 1 zeigt eine Ansicht einer bevorzugten Ausgestaltung der Erfindung. Insbesondere zeigt Figur 1 ein System, das eine Werkzeugmaschine (1) und eine automatische Vorschubvorrichtung (2) umfasst. Die Werkzeugmaschine (1) weist ein *Human Machine Interface* (HMI) (3) auf, während die Auto-Vorschubvorrichtung (2) kein eigenes HMI (3) im Sinne der Erfindung aufweist. Allerdings kann die automatische Vorschubvorrichtung (2) einen Not-Aus-Schalter aufweisen, der im Sinne der Erfindung kein HMI darstellt. Das HMI (3) der Werkzeugmaschine (1) kann ein Display, Bedienelemente, Schalter und/oder Tasten umfassen, ohne darauf beschränkt zu sein. Es ist im Sinne der Erfindung bevorzugt, dass die Werkzeugmaschine (1) und die automatische Vorschubvorrichtung (2) über eine Kommunikationsverbindung (5) miteinander verbunden sind, so dass vorteilhafterweise eine Kommunikation und/oder ein Datenaustausch zwischen den Systembestandteilen (1, 2) stattfinden kann. Vorzugsweise kann die Kommunikationsverbindung (5) drahtlos ausgebildet sein, also beispielsweise als *bluetooth*-Kommunikationsverbindung. Es sind jedoch im Kontext der vorliegenden Erfindung auch verschiedene andere drahtlose Kommunikationstypen bevorzugt.

Im rechten, unteren Bildbereich von Figur 1 ist eine schematische Abbildung einer Menüführung (4) dargestellt. Die Menüführung (4) umfasst mehrere Menü-Unterseiten (beispielhaft: 4a, 4b), die in Abhängigkeit von Betriebszuständen der Werkzeugmaschine (1) und/oder der automatischen Vorschubvorrichtung (2) einem Bediener des Systems über das HMI (3) der Werkzeugmaschine (1) angezeigt werden können. Der Bediener kann dann im Lichte der dargestellten Informationen beispielsweise Entscheidungen zum Betrieb des Systems treffen oder Einstellungen an der Werkzeugmaschine (1) und/oder an der Auto-Vorschubvorrichtung (2) vornehmen. Es kann im Sinne der Erfindung bevorzugt sein, dass dem Bediener eine einzige relevante Menü-Unterseite (4a, 4b) angezeigt wird. Es kann aber ebenso gut bevorzugt sein, dass dem Bediener des Systems eine Abfolge von Menü-Unterseiten (4a, 4b) der Menüführung (4) angezeigt werden. Die Anzeige und Auswahl der Menü-Unterseiten (4a, 4b) wird vorzugsweise von dem System zentral gesteuert, wobei diese Anzeige und Auswahl im Sinne der Erfindung bevorzugt als "automatische Steuerung" der Menüführung (4) bezeichnet wird. Insbesondere werden für die Auswahl der anzuzeigenden Menü-Unterseiten (4a, 4b) die Betriebszustände der Werkzeugmaschine (1) und der Auto-Vorschubvorrichtung (2) herangezogen.

### Bezugszeichenliste

- 1: Werkzeugmaschine
- 2: automatische Vorschubvorrichtung
- 3: *Human Machine Interface* (HMI)
- 4: Menüführung
- 5: Kommunikationsverbindung

## Patentansprüche

1. System, das eine Werkzeugmaschine (1) und ein automatische Vorschubvorrichtung (2) umfasst, wobei die Werkzeugmaschine ein *Human Machine Interface* (HMI) (3) zur Steuerung der Werkzeugmaschine (1) und der automatischen Vorschubeinrichtung (2) aufweist,
**dadurch gekennzeichnet, dass**
eine Menüführung (4) des HMI (3) in Abhängigkeit von Betriebszuständen der Werkzeugmaschine (1) und/oder der automatischen Vorschubvorrichtung (2) automatisch steuerbar ist.

2. System nach Anspruch 1
**dadurch gekennzeichnet, dass**
das System dazu eingerichtet ist, die Betriebszustände der Werkzeugmaschine (1) und/oder der automatischen Vorschubvorrichtung (2) zu erkennen und auszuwerten.

3. System nach Anspruch 1 oder 2
**dadurch gekennzeichnet, dass**
das System eine Kommunikationsverbindung (5) zur Kommunikation zwischen der Werkzeugmaschine (1) und der automatischen Vorschubvorrichtung (2) umfasst.

4. System nach Anspruch 3
**dadurch gekennzeichnet, dass**
die Kommunikationsverbindung (5) drahtlos ausgebildet ist.

5. System nach einer der vorhergehenden Ansprüche
**dadurch gekennzeichnet, dass**
die Betriebszustände von Einstellungen und/oder Unter-Zuständen der Werkzeugmaschine (1) und/oder der automatischen Vorschubvorrichtung (2) gebildet werden.

6. Verfahren zur Steuerung einer Werkzeugmaschine (1) und einer automatischen Vorschubvorrichtung (2) mit einem *Human Machine Interface* (HMI) (3), das an der Werkzeugmaschine (1) angeordnet ist,
wobei das Verfahren durch die **folgenden Schritte** gekennzeichnet ist:
a) Bereitstellung einer Werkzeugmaschine (1) mit einer HMI (3),
b) Bereitstellung einer automatischen Vorschubvorrichtung (2),
wobei eine Menüführung (4) des HMI (3) der Werkzeugmaschine (1) so eingerichtet ist, dass zu einem Zeitpunkt tBetrieb des Betriebs der Werkzeugmaschine (1) oder der automatischen Vorschubvorrichtung (2) über das HMI (3) nur diejenigen Menüseiten der Menüführung (4) anzeigt werden, die für den Betrieb der Werkzeugmaschine (1) und/oder der automatischen Vorschubeinrichtung (2) und/oder dessen Fortsetzung erforderlich sind.

7. Verfahren nach Anspruch 6
**dadurch gekennzeichnet, dass**
eine Auswahl der Menüseiten in Abhängigkeit von Betriebszuständen der Werkzeugmaschine (1) und/oder der automatischen Vorschubeinrichtung (2) erfolgt.

8. Verfahren nach Anspruch 6 oder 7
**dadurch gekennzeichnet, dass**
die Werkzeugmaschine (1) und/oder die automatische Vorschubvorrichtung (2) dazu eingerichtet ist, die Betriebszustände der Werkzeugmaschine (1) und/oder der automatischen Vorschubvorrichtung (2) zu erkennen und auszuwerten.

9. Verwendung eines *Human Machine Interface* (HMI) (3) zur Steuerung einer Werkzeugmaschine (1) und einer automatischen Vorschubvorrichtung (2)
**dadurch gekennzeichnet, dass**
das HMI (3) an der Werkzeugmaschine (1) angeordnet ist.
